# DEMANDE DE BREVET EUROPEEN

(11) **EP 4 763 007 A1**
(43) Date de publication de la demande: **24.06.2026**
(21) Numéro de dépôt: 25220706.3
(22) Date de dépôt: 04.12.2025
(51) Int. Cl.: A47J 31/44, A47J 31/46

(54) **SYSTEME DE MOUSSAGE DE LAIT POUR LA PREPARATION DE MOUSSES DE LAIT CHAUDE ET FROIDE**

(30) Priorité: 20.12.2024 FR 2414999
(71) Demandeur: SEB S.A., 69130 Ecully (FR)
(72) Inventeur: MORIN, Gilles, 69134 ECULLY CEDEX (FR); DASSONVILLE, Yohan, 69134 ECULLY CEDEX (FR)
(74) Mandataire: SEB Développement

(57) **Abrégé**

Le système de moussage de lait comporte des dispositifs de moussage de lait chaud et froid comprenant chacun une partie de mélange (6) comprenant un conduit d'écoulement principal (23) muni d'une première portion de conduit (25) et d'une deuxième portion de conduit (26) disposées de part et d'autre d'une restriction de section (24) ; et un conduit d'amenée d'eau et un conduit d'amenée de lait débouchant chacun dans le conduit d'écoulement principal (23). L'orifice de sortie de lait (35) du dispositif de moussage de lait froid (2') présente une section de passage différente de celle de l'orifice de sortie de lait (35) du dispositif de moussage de lait chaud (2), et une extrémité aval de la première portion de conduit (25) du dispositif de moussage de lait froid (2') présente une section de passage qui est différente de celle d'une extrémité aval de la première portion de conduit (25) du dispositif de moussage de lait chaud (2).

## Description

### Domaine technique

La présente invention concerne le domaine des appareils de distribution de boissons, et plus particulièrement le domaine des dispositifs de moussage de lait destinés à coopérer avec des machines à café.

### Etat de la technique

Le document FR3136356 divulgue un dispositif de moussage de lait comportant :
- une partie de mélange comprenant :
   ∘ un conduit d'écoulement principal comportant une restriction de section, une première portion de conduit qui est située en amont de la restriction de section et qui s'étend jusqu'à la restriction de section, et une deuxième portion de conduit qui est située en aval de la restriction de section et qui s'étend depuis la restriction de section,
   ∘ une chambre de mélange reliée fluidiquement au conduit d'écoulement principal et munie d'un orifice de sortie,
- une partie de fermeture mobile par rapport à la partie de mélange entre une position de fermeture dans laquelle la partie de fermeture ferme la chambre de mélange et le conduit d'écoulement principal et une position d'ouverture dans laquelle la chambre de mélange et le conduit d'écoulement principal sont ouverts et accessibles pour être nettoyés,
- un conduit d'amenée d'eau comprenant un orifice de sortie d'eau débouchant dans la première portion de conduit,
- un conduit d'amenée de lait comprenant un orifice de sortie de lait débouchant dans le conduit d'écoulement principal, et
- un conduit d'amenée d'air relié fluidiquement au conduit d'écoulement principal.

Le conduit d'écoulement principal est plus particulièrement configuré de telle sorte qu'un écoulement de liquide, notamment d'eau, et notamment encore de vapeur d'eau, dans le conduit d'écoulement principal depuis l'orifice de sortie d'eau et jusqu'à la chambre de mélange génère une dépression dans le conduit d'amenée de lait et une dépression dans le conduit d'amenée d'air et entraîne une aspiration de lait et d'air dans le conduit d'écoulement principal.

La configuration particulière du dispositif de moussage de lait décrit dans le document FR3136356, et plus particulièrement de la partie de mélange et de la partie de fermeture, permet un nettoyage aisé du dispositif de moussage de lait.

La mousse de lait produite avec le dispositif de moussage de lait précité présente une température élevée, par exemple de l'ordre de 50 à 60°C, de telle sorte que ce dispositif de moussage de lait n'est pas approprié pour la préparation de boissons froides.

Afin de permettre à un utilisateur de pouvoir préparer, selon son envie, une boisson froide à base de mousse de lait froid ou une boisson chaude à base de mousse de lait chaude, il est connu d'équiper un appareil de distribution de boissons avec un dispositif de moussage de lait chaud et un dispositif de moussage de lait froid qui sont aptes chacun à être connectés à un embout de sortie d'eau chaude/vapeur équipant l'appareil de distribution de boissons.

Afin de pouvoir produire une mousse de lait chaude optimale ou une mousse de lait froide optimale avec un tel appareil de distribution de boissons, il est nécessaire d'adapter, en fonction de la recette choisie, la régulation thermique de la chaudière équipant l'appareil de distribution de boissons, et ce afin que la température de la mousse de lait produite avec le dispositif de moussage de lait froid ne soit pas trop élevée et que la température de la mousse de lait produite avec le dispositif de moussage de lait chaud ne soit pas trop basse.

A cet effet, l'appareil de distribution de boissons précité comporte un dispositif de détection apte à détecter automatiquement le dispositif de moussage de lait (parmi les dispositifs de moussage de lait et froid) qui est connecté à l'appareil de distribution de boissons, et l'unité de commande équipant l'appareil de distribution de boissons est apte à ajuster automatiquement la régulation thermique de la chaudière équipant l'appareil de distribution de boissons en fonction du dispositif de moussage de lait détecté.

Toutefois, la complexité et les coûts de fabrication d'un tel appareil de distribution de boissons sont élevés.

### Résumé de l'invention

La présente invention vise à remédier à tout ou partie de ces inconvénients.

Le problème technique à la base de l'invention consiste notamment à fournir un système de moussage de lait permettant la préparation de boissons à base de mousse de lait froide et à base de mousse de lait chaude, tout en limitant les coûts de fabrication d'un appareil de distribution de boissons destiné à être équipé d'un tel système de moussage de lait.

A cet effet, la présente invention concerne un système de moussage de lait comprenant un dispositif de moussage de lait chaud et un dispositif de moussage de lait froid destinés chacun à coopérer avec un appareil de distribution de boissons, chacun des dispositifs de moussage de lait chaud et froid comportant :
- une partie de mélange comprenant :
   ∘ un conduit d'écoulement principal comportant une restriction de section, une première portion de conduit qui est située en amont de la restriction de section et qui s'étend jusqu'à la restriction de section, et une deuxième portion de conduit qui est située en aval de la restriction de section et qui s'étend depuis la restriction de section,
   ∘ une chambre de mélange reliée fluidiquement au conduit d'écoulement principal et munie d'un orifice de sortie,
- une partie de fermeture configurée pour occuper une position de fermeture dans laquelle ladite partie de fermeture ferme la chambre de mélange respective et le conduit d'écoulement principal respectif et une position d'ouverture dans laquelle la chambre de mélange respective et le conduit d'écoulement principal respectif sont ouverts et accessibles pour être nettoyés,
- un conduit d'amenée d'eau comprenant un orifice de sortie d'eau débouchant dans la première portion de conduit respective,
- un conduit d'amenée de lait comprenant un orifice de sortie de lait débouchant dans le conduit d'écoulement principal respectif, et
- un conduit d'amenée d'air relié fluidiquement au conduit d'écoulement principal respectif,

l'orifice de sortie de lait du dispositif de moussage de lait froid présentant une section de passage qui est différente de la section de passage de l'orifice de sortie de lait du dispositif de moussage de lait chaud, et une extrémité aval de la première portion de conduit du dispositif de moussage de lait froid présentant une section de passage qui est différente de la section de passage d'une extrémité aval de la première portion de conduit du dispositif de moussage de lait chaud.

Une telle configuration du système de moussage de lait permet de pouvoir produire une mousse de lait chaude avec le dispositif de moussage de lait chaud et une mousse de lait froide avec le dispositif de moussage de lait froid, sans avoir à modifier l'appareil de distribution de boissons associé, et notamment la régulation thermique de l'élément chauffant, et plus particulièrement de la chaudière, produisant l'eau chaude ou la vapeur destinée à être acheminée par le conduit d'amenée d'eau. Ainsi, il n'est notamment pas nécessaire d'équiper l'appareil de distribution de boissons avec un dispositif de détection apte à détecter automatiquement le dispositif de moussage de lait (parmi les dispositifs de moussage de lait et froid) qui est connecté à l'appareil de distribution de boissons ou encore d'adapter une interface utilisateur équipant l'appareil de distribution de boissons pour permettre à un utilisateur d'indiquer quel dispositif de moussage de lait (parmi les dispositifs de moussage de lait et froid) est connecté à l'appareil de distribution de boissons, ce qui permet de réduire significativement les coûts de fabrication de l'appareil de distribution de boissons et d'en simplifier l'utilisation.

Le système de moussage de lait peut en outre présenter une ou plusieurs des caractéristiques suivantes, prises seules ou en combinaison.

Selon un mode de réalisation de l'invention, le conduit d'amenée d'eau est un conduit d'amenée d'eau froide ou d'eau chaude ou de vapeur, et de préférence un conduit d'amenée d'eau chaude/vapeur.

Selon un mode de réalisation de l'invention, chaque restriction de section forme un système d'aspiration de lait et d'air basé sur l'effet venturi.

En d'autres termes, chaque conduit d'écoulement principal est configuré de telle sorte qu'un écoulement d'eau dans ledit conduit d'écoulement principal depuis l'orifice de sortie d'eau respectif et jusqu'à la chambre de mélange respective génère une dépression dans le conduit d'amenée de lait respectif et une dépression dans le conduit d'amenée d'air respectif et entraîne une aspiration de lait et d'air dans ledit conduit d'écoulement principal. Une telle configuration de chacun des dispositifs de moussage de lait froid et chaud permet de contrôler la quantité d'air et la quantité de lait admises dans la chambre de mélange respective, sans requérir la présence de moyens d'admission complexes et onéreux.

Selon un mode de réalisation de l'invention, chaque conduit d'amenée de lait débouche dans le conduit d'écoulement principal respectif à proximité de la restriction de section respective.

Selon un mode de réalisation de l'invention, l'orifice de sortie de lait du dispositif de moussage de lait froid présente une section de passage qui est supérieure à la section de passage de l'orifice de sortie de lait du dispositif de moussage de lait chaud. Une telle configuration du dispositif de moussage de lait froid, et en particulier de son orifice de sortie de lait, assure un débit d'aspiration de lait sensiblement plus important dans le conduit d'écoulement principal (par rapport au dispositif de moussage de lait chaud), ce qui permet de réduire l'échauffement du lait par l'eau et notamment la vapeur d'eau s'écoulant dans le conduit d'écoulement principal et donc de produire ainsi une mousse de lait qui est à une température bien inférieure à celle de la mousse de lait produite par le dispositif de moussage de lait chaud.

Selon un mode de réalisation de l'invention, un rapport de la section de passage de l'orifice de sortie de lait du dispositif de moussage de lait froid sur la section de passage de l'orifice de sortie de lait du dispositif de moussage de lait chaud est supérieur à 2, et est par exemple compris entre 2 et 15 et avantageusement entre 4 et 9.

Selon un mode de réalisation de l'invention, l'orifice de sortie de lait du dispositif de moussage de lait froid présente un diamètre compris entre 3 et 6 mm, et par exemple égal à environ 4,3 mm. Un tel dimensionnement de l'orifice de sortie de lait du dispositif de moussage de lait froid permet d'augmenter encore le débit d'aspiration de lait dans le conduit d'écoulement principal respectif, et donc de réduire encore l'échauffement du lait par l'eau et notamment la vapeur d'eau s'écoulant dans ledit conduit d'écoulement principal.

Selon un mode de réalisation de l'invention, l'orifice de sortie de lait du dispositif de moussage de lait chaud présente un diamètre compris entre 1 et 2 mm, et par exemple égal à environ 1,6 mm.

Selon un mode de réalisation de l'invention, l'extrémité aval de la première portion de conduit du dispositif de moussage de lait froid présente une section de passage qui est inférieure à la section de passage de l'extrémité aval de la première portion de conduit du dispositif de moussage de lait chaud. Une telle configuration du dispositif de moussage de lait froid permet d'augmenter les pertes de charge au sein de la première portion de conduit du dispositif de moussage de lait froid et d'autre part d'augmenter le débit d'aspiration de lait dans le conduit d'écoulement principal respectif. Ainsi, une telle valeur du rapport précité permet de réduire encore l'échauffement du lait par l'eau et notamment la vapeur d'eau s'écoulant dans le conduit d'écoulement principal du dispositif de moussage de lait froid, et donc de réduire encore la température de la mousse de lait produite par le dispositif de moussage de lait froid.

Selon un mode de réalisation de l'invention, l'extrémité aval de la première portion de conduit du dispositif de moussage de lait froid présente une section de passage comprise entre 0,5 et 3 mm², et par exemple entre 0,7 et 1,3 mm². Un tel dimensionnement de l'extrémité aval de la première portion de conduit du dispositif de moussage de lait froid permet d'augmenter les pertes de charge au sein de la première portion de conduit, et ainsi d'augmenter la dépression au niveau de la restriction de section respective et donc au niveau de l'orifice de sortie de lait respectif.

Selon un mode de réalisation de l'invention, un rapport de la section de passage de l'extrémité aval de la première portion de conduit du dispositif de moussage de lait chaud sur la section de passage de l'extrémité aval de la première portion de conduit du dispositif de moussage de lait froid est supérieur à 1,1, et est par exemple compris entre 1,1 et 2,5.

Selon un mode de réalisation de l'invention, l'extrémité amont de la deuxième portion de conduit du dispositif de moussage de lait froid présente une section de passage qui est supérieure à la section de passage de l'extrémité amont de la deuxième portion de conduit du dispositif de moussage de lait chaud.

Selon un mode de réalisation de l'invention, l'extrémité amont de la deuxième portion de conduit du dispositif de moussage de lait chaud présente une section de passage comprise entre 2,2 et 3,5 mm², et par exemple 2,4 et 2,8 mm².

Selon un mode de réalisation de l'invention, l'extrémité amont de la deuxième portion de conduit du dispositif de moussage de lait froid présente une section de passage comprise entre 4 et 18 mm², avantageusement entre 5 et 15 mm² et par exemple entre 5 et 12 mm².

Selon un mode de réalisation de l'invention, chaque première portion de conduit présente une section de passage qui diminue en direction de la restriction de section respective, et chaque deuxième portion de conduit présente une section de passage qui augmente en direction de la chambre de mélange respective.

Selon un mode de réalisation de l'invention, la deuxième portion de conduit de chacun des dispositifs de moussage de lait chaud et froid comporte deux parois latérales qui sont parallèles ou divergent en direction de la chambre de mélange respective. De façon avantageuse, les deux parois latérales de la deuxième portion de conduit du dispositif de moussage de lait chaud sont inclinées l'une par rapport à l'autre d'un angle compris entre 10 et 25°, et par exemple égal à environ 15°, et les deux parois latérales de la deuxième portion de conduit du dispositif de moussage de lait froid sont inclinées l'une par rapport à l'autre d'un angle compris entre 0 et 10°, et par exemple égal à environ 4°.

Selon un mode de réalisation de l'invention, la deuxième portion de conduit du dispositif de moussage de lait froid présente une conicité inférieure à la conicité de la deuxième portion de conduit du dispositif de moussage de lait chaud.

Selon un mode de réalisation de l'invention, l'extrémité amont de la deuxième portion de conduit du dispositif de moussage de lait froid présente une largeur supérieure à la largeur de l'extrémité amont de la deuxième portion de conduit du dispositif de moussage de lait chaud.

Selon un mode de réalisation de l'invention, l'extrémité amont de la deuxième portion de conduit du dispositif de moussage de lait froid présente une largeur supérieure ou égale à 2 mm, avantageusement comprise entre 2,5 et 5 mm, et par exemple égale à 3,5 mm ou 4 mm.

Selon un mode de réalisation de l'invention, l'extrémité amont de la deuxième portion de conduit du dispositif de moussage de lait chaud présente une largeur inférieure à 2 mm, et par exemple égale à environ 1,5 mm.

Selon un mode de réalisation de l'invention, l'extrémité aval de la deuxième portion de conduit du dispositif de moussage de lait frois présente une largeur comprise entre 2 et 6 mm.

Selon un mode de réalisation de l'invention, l'extrémité amont de la deuxième portion de conduit de chacun des dispositifs de moussage de lait chaud et froid présente une hauteur comprise entre 1,5 et 4 mm.

Selon un mode de réalisation de l'invention, la deuxième portion de conduit du dispositif de moussage de lait froid présente une hauteur minimale supérieure à la hauteur minimale de la deuxième portion de conduit du dispositif de moussage de lait chaud.

Selon un mode de réalisation de l'invention, l'extrémité amont de la deuxième portion de conduit du dispositif de moussage de lait froid présente une hauteur supérieure à la hauteur de l'extrémité amont de la deuxième portion de conduit du dispositif de moussage de lait chaud.

Selon un mode de réalisation de l'invention, l'extrémité amont de la deuxième portion de conduit du dispositif de moussage de lait chaud présente une hauteur comprise entre 1,5 et 2 mm, et par exemple égale à environ 1,7 mm, et l'extrémité amont de la deuxième portion de conduit du dispositif de moussage de lait froid présente une hauteur comprise entre 2 et 4 mm, et par exemple égale à environ 2,3 mm.

Selon un mode de réalisation de l'invention, la première portion de conduit de chacun des dispositifs de moussage de lait froid et chaud présente une section transversale de forme globalement rectangulaire.

Selon un mode de réalisation de l'invention, la deuxième portion de conduit de chacun des dispositifs de moussage de lait froid et chaud présente une section transversale de forme globalement rectangulaire.

Selon un mode de réalisation de l'invention, l'extrémité aval de la première portion de conduit du dispositif de moussage de lait froid présente une largeur inférieure à la largeur de l'extrémité aval de la première portion de conduit du dispositif de moussage de lait chaud.

Selon un mode de réalisation de l'invention, l'extrémité aval de la première portion de conduit du dispositif de moussage de lait froid présente une largeur comprise entre 0,7 et 1,1 mm, et par exemple égale à environ 1 mm.

Selon un mode de réalisation de l'invention, l'extrémité aval de la première portion de conduit du dispositif de moussage de lait chaud présente une largeur comprise entre 1,1 et 1,5 mm, et par exemple égale à environ 1,25 mm.

Selon un mode de réalisation de l'invention, l'extrémité aval de la première portion de conduit du dispositif de moussage de lait froid présente une hauteur inférieure à la hauteur de l'extrémité aval de la première portion de conduit du dispositif de moussage de lait chaud.

Selon un mode de réalisation de l'invention, l'extrémité aval de la première portion de conduit du dispositif de moussage de lait froid présente une hauteur comprise entre 0,6 et 1,1 mm et par exemple égale à 0,9 mm.

Selon un mode de réalisation de l'invention, l'extrémité aval de la première portion de conduit du dispositif de moussage de lait chaud présente une hauteur comprise entre 1,1 mm et 1,5 mm et par exemple égale à environ 1,25 mm.

Selon un mode de réalisation de l'invention, le conduit d'amenée d'air du dispositif de moussage de lait froid présente une section de passage supérieure à la section de passage du conduit d'amenée d'air du dispositif de moussage de lait chaud.

Selon un mode de réalisation de l'invention, pour le dispositif de moussage de lait froid, un rapport de la section de passage de l'orifice de sortie de lait sur la section de passage de l'extrémité aval de la première portion de conduit est supérieur à 3, et par exemple compris entre 3 et 40 et avantageusement entre 3,5 et 31. Une telle configuration de la partie de mélange du dispositif de moussage de lait froid, et en particulier du conduit d'écoulement principal et de l'orifice de sortie de lait du dispositif de moussage de lait froid, assure un débit d'aspiration de lait sensiblement plus important dans le conduit d'écoulement principal (par rapport au dispositif de moussage de lait chaud), ce qui permet de réduire de manière significative l'échauffement du lait par l'eau et notamment la vapeur d'eau s'écoulant dans le conduit d'écoulement principal et donc de produire ainsi une mousse de lait qui est sensiblement à température ambiante.

Selon un mode de réalisation de l'invention, une paroi de fond de la deuxième portion de conduit du dispositif de moussage de lait froid comporte au moins une portion de surface qui est inclinée (avantageusement d'un angle d'inclinaison compris entre 5 et 25°, et par exemple d'environ 15°) par rapport à l'horizontale de telle sorte que la hauteur de ladite deuxième portion de conduit augmente en direction de la chambre de mélange respective.

Selon un mode de réalisation de l'invention, chaque conduit d'écoulement principal est entièrement délimité par la partie de mélange respective et la partie de fermeture respective. Ainsi, les protéines de lait, contenues dans le lait s'écoulant dans chaque conduit d'écoulement principal, ne sont pas susceptibles de modifier la géométrie de ce dernier, et donc d'avoir un impact sur la quantité d'air introduite dans la chambre de mélange respective.

Selon un mode de réalisation de l'invention, chacun des dispositifs de moussage de lait chaud et froid comporte un dispositif de réglage de débit d'air configuré pour régler un débit d'air s'écoulant dans le conduit d'amenée d'air respectif. La présence d'un tel dispositif de réglage de débit d'air permet à un utilisateur d'adapter la consistance de la mousse de lait obtenue en fonction de ses souhaits et également de modifier le volume et/ou la quantité de mousse obtenue. L'utilisateur peut par exemple régler le débit d'air introduit dans la chambre de mélange respective afin d'obtenir une mousse de lait plus ou moins ferme.

Selon un mode de réalisation de l'invention, chaque dispositif de réglage de débit d'air comporte :
- un organe de réglage de débit, tel qu'un bouton de réglage de débit, monté mobile, et par exemple monté mobile en translation ou encore selon un mouvement hélicoïdal, selon une direction de déplacement et configuré pour occuper une pluralité de positions de réglage décalées les unes des autres selon la direction de déplacement, et
- un élément d'étanchéité, par exemple annulaire, délimitant en partie un passage d'écoulement d'air ayant une section de passage qui varie en fonction de la position occupée par l'organe de réglage de débit respectif.

Une telle configuration du dispositif de réglage de débit d'air permet de régler aisément la quantité d'air introduite dans le conduit d'écoulement principal respectif en déplaçant l'organe de réglage de débit dans une position de réglage correspondant à la consistance de mousse souhaitée.

Selon un mode de réalisation de l'invention, chaque élément d'étanchéité est fixé à l'organe de réglage de débit respectif.

Selon un mode de réalisation de l'invention, chaque conduit d'amenée d'air comprend un passage d'air calibré, par exemple annulaire, configuré pour définir un débit d'air maximal dans ledit conduit d'amenée d'air. La présence d'un tel passage d'air calibré permet d'éviter l'admission d'une quantité d'air trop importante dans la chambre de mélange respective, et donc l'obtention d'une mousse de lait qui soit trop aérée et/ou pourvue de bulles de grands diamètres.

Selon un mode de réalisation de l'invention, chaque passage d'air calibré est situé en aval du dispositif de réglage de débit d'air respectif, et par exemple en aval du passage d'écoulement d'air respectif.

Selon un mode de réalisation de l'invention, chaque dispositif de réglage de débit d'air comporte une partie de support fixée à la partie de fermeture respective et configurée pour supporter l'organe de réglage de débit respectif, chaque organe de réglage de débit étant monté mobile par rapport à la partie de support respective.

Selon un mode de réalisation de l'invention, chaque partie de support comporte un trou d'insertion, et chaque dispositif de réglage de débit d'air comporte en outre un organe de restriction de passage logé au moins en partie dans le trou d'insertion respectif, chaque trou d'insertion et l'organe de restriction de passage respectif délimitant le passage d'air calibré respectif. Une telle configuration de chaque passage d'air calibré permet un nettoyage aisé du dispositif de moussage de lait respectif, et en particulier dudit passage d'air calibré, en retirant l'organe de restriction de passage hors du trou d'insertion et en procédant ensuite au nettoyage notamment de l'organe de restriction de passage et du trou d'insertion. De plus, une telle configuration de chaque passage d'air calibré limite sensiblement les risques d'obstruction du passage d'air calibré puisque les mouvements successifs de l'organe de réglage de débit respectif selon la direction de déplacement ont pour conséquence d'évacuer, hors du passage d'air calibré, des éventuelles particules, telles que des particules de poussière, retenues dans le passage d'air calibré.

Selon un mode de réalisation de l'invention, l'élément d'étanchéité et la partie de support de chacun des dispositifs de réglage de débit d'air délimitent le passage d'écoulement d'air respectif.

Selon un mode de réalisation de l'invention, chaque partie de fermeture est configurée pour recouvrir la partie de mélange respective.

Selon un mode de réalisation de l'invention, chaque partie de fermeture comporte le conduit d'amenée d'air respectif. Un tel agencement de chaque conduit d'amenée d'air permet de limiter sensiblement les risques d'altération dudit conduit d'amenée d'air par les protéines de lait contenues dans le lait s'écoulant dans le conduit d'écoulement principal respectif, et donc de garantir l'admission d'une quantité d'air maîtrisée dans la chambre de mélange respective.

Selon un mode de réalisation de l'invention, chaque partie de mélange comporte au moins en partie le conduit d'amenée de lait respectif.

Selon un mode de réalisation de l'invention, chacun des dispositifs de moussage de lait chaud et froid comporte un joint d'étanchéité agencé à une zone de jonction entre la partie de mélange respective et la partie de fermeture respective, chaque joint d'étanchéité s'étendant autour de la chambre de mélange respective et du conduit d'écoulement principal respectif.

Selon un mode de réalisation de l'invention, chaque partie de mélange comporte un canal d'admission d'air configuré pour être fermé par la partie de fermeture respective, chaque canal d'admission d'air reliant le conduit d'amenée d'air respectif au conduit d'écoulement principal respectif. De façon avantageuse, chaque joint d'étanchéité s'étend autour du canal d'admission d'air respectif.

Selon un mode de réalisation de l'invention, chaque canal d'admission d'air débouche dans le conduit d'écoulement principal respectif à proximité de la restriction de section respective.

Selon un mode de réalisation de l'invention, chaque chambre de mélange est du type cyclonique et est configurée pour s'étendre sensiblement verticalement, chaque conduit d'écoulement principal débouchant dans une partie supérieure de la chambre de mélange respective et l'orifice de sortie de chaque chambre de mélange étant situé dans une partie inférieure de ladite chambre de mélange. Une telle configuration de chaque chambre de mélange favorise le mélange de l'air, du lait et de l'eau chaude, de l'eau froide ou de la vapeur d'eau introduits dans ladite chambre de mélange.

Selon un mode de réalisation de l'invention, chacun des dispositifs de moussage de lait chaud et froid comporte un réservoir de lait comprenant une ouverture de remplissage supérieure, chaque partie de mélange étant agencée au niveau de l'ouverture de remplissage supérieure respective.

Selon un mode de réalisation de l'invention, chaque partie de mélange est configurée pour fermer au moins partiellement le réservoir de lait respectif et pour être amovible par rapport audit réservoir de lait.

Selon un mode de réalisation de l'invention, chacun des dispositifs de moussage de lait froid et chaud comporte un conduit de déversement de lait relié fluidiquement à l'orifice de sortie de la chambre de mélange respective et configuré pour être situé verticalement au-dessus d'un récipient, tel qu'une tasse.

Selon un mode de réalisation de l'invention, chacun des dispositifs de moussage de lait froid et chaud comporte un système de maintien configuré pour maintenir la partie de fermeture respective en position de fermeture. Une telle configuration du système de maintien permet d'éviter un déplacement intempestif de la partie de fermeture respective vers la position d'ouverture.

Selon un mode de réalisation de l'invention, chaque système de maintien est configuré pour fixer de manière amovible, c'est-à-dire de manière temporaire et réversible, la partie de fermeture respective à la partie de mélange respective.

Selon un mode de réalisation de l'invention, chacun des dispositifs de moussage de lait froid et chaud comporte un système de fixation configuré pour fixer de manière amovible, c'est-à-dire de manière temporaire et réversible, la partie de mélange respective au réservoir de lait respectif.

Selon un mode de réalisation de l'invention, chaque partie de mélange comporte une face supérieure dans laquelle est ménagé le conduit d'écoulement principal respectif et dans laquelle débouche la chambre de mélange respective.

La présente invention concerne en outre un appareil de distribution de boissons, et par exemple une machine à café, telle qu'une machine à café automatique, comportant un embout de sortie d'eau et un système de moussage de lait selon la présente invention, le conduit d'amenée d'eau de chacun des dispositifs de moussage de lait chaud et froid étant configuré pour être relié fluidiquement à l'embout de sortie d'eau.

Selon un mode de réalisation de l'invention, l'appareil de distribution de boissons comporte une chaudière configurée pour produire de l'eau chaude et/ou de la vapeur. De façon avantageuse, l'embout de sortie d'eau est relié fluidiquement à la chaudière.

Par machine à café automatique, on comprend que la machine à café comprend notamment une chambre d'infusion qui peut être alimentée en mouture de café par un broyeur à grain incorporé dans la machine, ou une chambre d'infusion qui peut recevoir une capsule ou une dosette de café ou une chambre d'infusion formée par une cuillère destinée à être remplie de mouture de café et vidée manuellement.

### Brève description des figures

L'invention sera mieux comprise à l'aide de la description qui suit en référence aux dessins schématiques annexés représentant, à titre d'exemple non limitatif, une forme d'exécution de ce dispositif de moussage de lait .
Figure 1 est une vue en perspective de dessus d'un dispositif de moussage de lait froid selon la présente invention.
Figure 2 est une vue de dessus du dispositif de moussage de lait de la figure 1.
Figure 3 est une vue en perspective, tronquée longitudinalement, du dispositif de moussage de lait de la figure 1.
Figure 4 est une vue en perspective d'un joint d'étanchéité du dispositif de moussage de lait de la figure 1.
Figure 5 est une vue partielle en perspective de dessus du dispositif de moussage de lait de la figure 1.
Figure 6 est une vue partielle en perspective de dessus du dispositif de moussage de lait de la figure 1 dans laquelle le joint d'étanchéité a été déposé.
Figure 7 est une vue partielle en perspective de dessus d'un dispositif de moussage de lait chaud selon la présente invention.
Figure 8 est une vue partielle en perspective de dessus du dispositif de moussage de lait de la figure 7 dans laquelle le joint d'étanchéité a été déposé.
Figure 9 est une vue en perspective de dessus d'une partie de mélange et d'une partie de fermeture du dispositif de moussage de lait de la figure 1.
Figure 10 est une vue partielle en perspective et en éclaté du dispositif de moussage de lait de la figure 7.
Figure 11 est une vue partielle en perspective de dessus de la partie de mélange, du dispositif de moussage de lait de la figure 1, équipée du joint d'étanchéité de la figure 4.
Figure 12 est une vue de dessus, à l'échelle agrandie, de la partie de mélange, du dispositif de moussage de lait de la figure 1, équipée du joint d'étanchéité de la figure 4.
Figure 13 est une vue partielle en perspective de dessus de la partie de mélange, du dispositif de moussage de lait de la figure 7, équipée du joint d'étanchéité de la figure 4.
Figure 14 est une vue de dessus, à l'échelle agrandie, de la partie de mélange, du dispositif de moussage de lait de la figure 7, équipée du joint d'étanchéité de la figure 4.
Figure 15 est une vue partielle en perspective, tronquée longitudinalement, du dispositif de moussage de lait de la figure 1.
Figure 16 est une vue en perspective de dessous d'un sous-ensemble du dispositif de moussage de lait de la figure 1.
Figure 17 est une vue en perspective de dessus d'une partie de verrouillage appartement au dispositif de moussage de lait de la figure 1.
Figure 18 est une vue partielle de dessus de la partie de mélange du dispositif de moussage de lait de la figure 1.
Figure 19 est une en coupe transversale du dispositif de moussage de lait de la figure 1
Figure 20 est une vue partielle en perspective de dessus d'un dispositif de réglage de débit d'air appartenant au dispositif de moussage de lait de la figure 1.
Figure 21 est une vue en perspective de dessus d'une partie de support appartenant au dispositif de réglage de débit d'air de la figure 20.
Figure 22 est une vue en perspective de dessus de la partie de support et d'un organe de restriction de passage appartenant au dispositif de réglage de débit d'air de la figure 20.
Figure 23 est une vue partielle en perspective de dessus du dispositif de réglage de débit d'air de la figure 20.
Figure 24 est une vue en coupe longitudinale du dispositif de réglage de débit d'air de la figure 20.
Figure 25 est une vue en perspective d'une machine à café automatique équipée du dispositif de moussage de lait de la figure 1.

### Description détaillée

Dans le présent document, le terme « ouvert » en relation avec le conduit d'écoulement principal signifie que le conduit d'écoulement principal est ouvert sur au moins 70 % de sa longueur et par exemple sur l'intégralité de sa longueur.

Dans le présent document, les termes « amont » et « aval » en relation avec le conduit d'écoulement principal sont définis par rapport au sens de circulation d'un fluide, au sein du conduit d'écoulement principal, en conditions d'utilisation du dispositif de moussage de lait respectif.

A défaut de stipulation contraire, le terme « sensiblement » signifie, dans le présent document, « exactement ou à 10% ou à 10° près ».

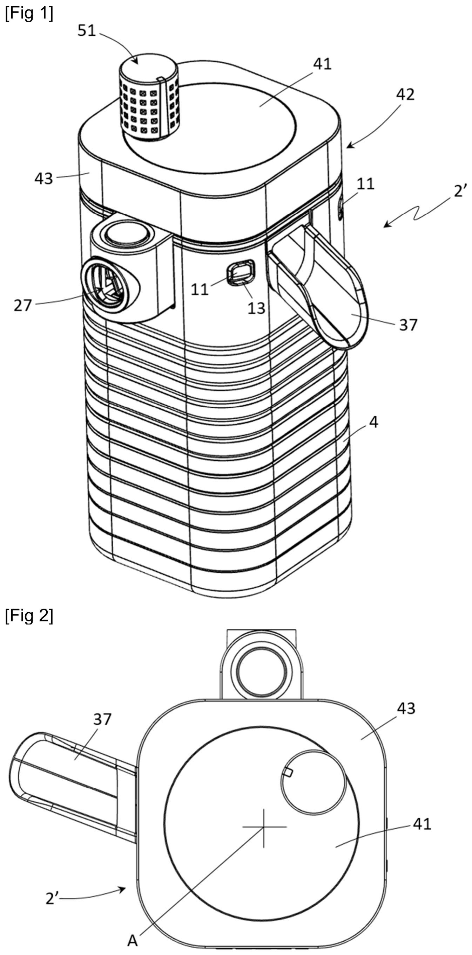

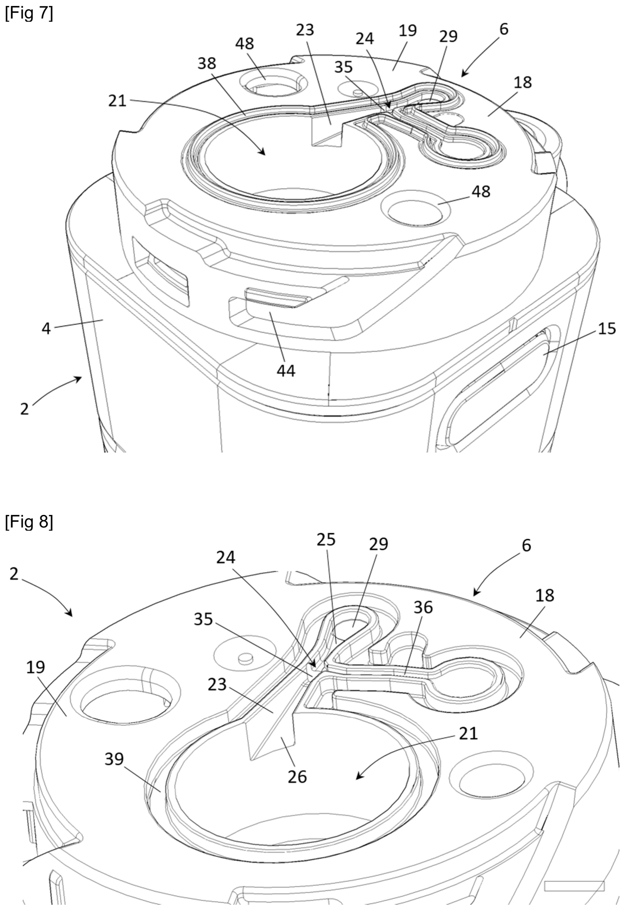

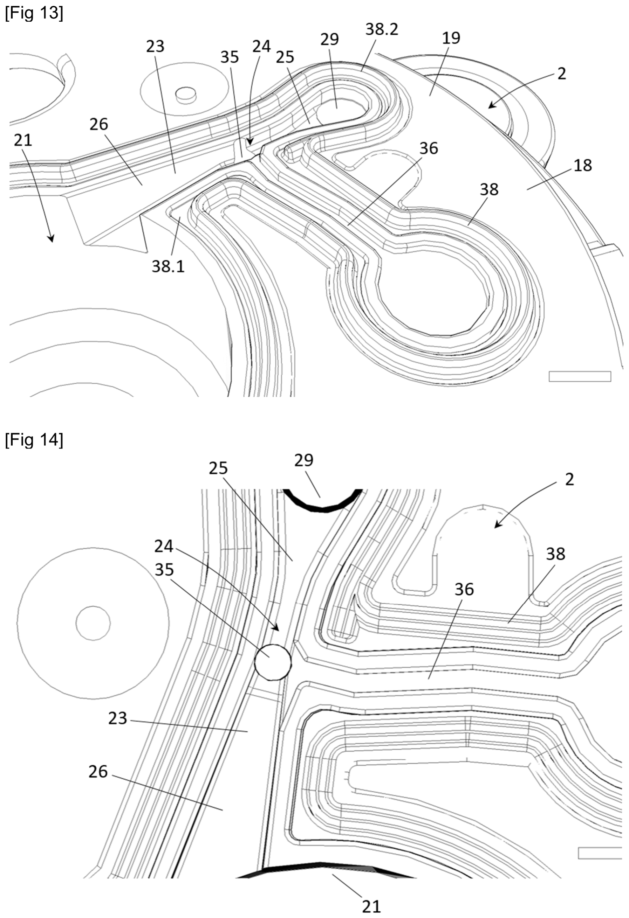

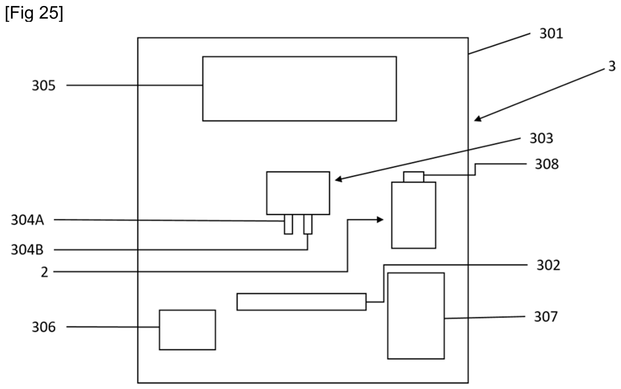

Les figures 1 à 25 représentent un système de moussage de lait comprenant un dispositif de moussage de lait chaud 2 et un dispositif de moussage de lait froid 2' destinés chacun à coopérer avec un appareil de distribution de boissons 3 (voir la figure 25), par exemple une machine à café, telle qu'une machine à café automatique. En variante, l'appareil de distribution de boisson 3 pourrait être une machine de distribution d'eau et notamment une machine de distribution d'eau chaude ou de thé.

Dans la suite de la description les mêmes références sont utilisés pour désigner les éléments correspondants formant le dispositif de moussage de lait chaud 2 et le dispositif de moussage de lait froid 2'.

L'appareil de distribution de boissons 3 comporte notamment un bâti 301, un support de récipient 302 sur lequel un récipient peut être disposé, et une tête de distribution de boisson 303. La tête de distribution de boisson 303 comporte au moins une buse, de préférence deux buses de sortie de café 304A, 304B.

L'appareil de distribution de boissons 3 comporte un circuit de commande 305 pour gérer la réalisation d'une boisson à partir des instructions données par un utilisateur. L'appareil de distribution de boissons 3 comporte également avantageusement une chaudière 306 produisant de l'eau chaude et/ou de la vapeur, et un réservoir 307 formant une réserve en eau froide. Le réservoir 307 permet d'alimenter la chaudière 306 pour produire de l'eau chaude et/ou de la vapeur.

L'appareil de distribution de boissons 3 comprend également un embout de sortie d'eau 308. L'embout de sortie d'eau 308 est relié au réservoir 307. L'embout de sortie 308 est avantageusement un embout de sortie d'eau chaude/vapeur propre à être alimenté en eau chaude et/ou vapeur par la chaudière 306.

De manière connue et non représentée, l'appareil de distribution de boissons 3 comprend avantageusement un réservoir de grains de café, un moulin à grains automatique et une chambre d'infusion propre à recevoir les grains de café moulus et à être alimentée en eau chaude par la chaudière 306. La chambre d'infusion est reliée fluidiquement à la tête de distribution de boisson 303 de manière à ce que l'appareil de distribution de boissons 3 soit propre à distribuer une boisson à base de café au niveau des buses de sortie de café 304A, 304B.

Chacun des dispositifs de moussage de lait chaud et froid 2, 2' comporte un réservoir de lait 4 délimitant un volume interne destiné à contenir du lait et comprenant une ouverture de remplissage supérieure 5 à travers laquelle du lait peut être introduit dans le réservoir de lait 4 respectif. Chaque réservoir de lait 4 peut par exemple présenter une section transversale de forme rectangulaire, circulaire ou encore oblongue.

Chacun des dispositifs de moussage de lait chaud et froid 2, 2' comporte en outre une partie de mélange 6 agencée au niveau de l'ouverture de remplissage supérieure 5 respective.

Selon le mode de réalisation représenté sur les figures, chaque partie de mélange 6 comporte un corps de fermeture 7 configuré pour fermer le réservoir de lait 4 respectif et pour être amovible par rapport au réservoir de lait 4 respectif. Chaque corps de fermeture 7 est plus particulièrement configuré pour être logé dans une partie supérieure du réservoir de lait 4 respectif et pour être inséré dans le réservoir de lait 4 respectif via l'ouverture de remplissage supérieure 5 respective.

De façon avantageuse, chaque corps de fermeture 7 est configuré pour être immobile en rotation par rapport au réservoir de lait 4 respectif lorsque ledit corps de fermeture 7 est reçu dans le réservoir de lait 4 respectif. A cet effet, chaque corps de fermeture 7 présente avantageusement une section transversale de forme rectangulaire.

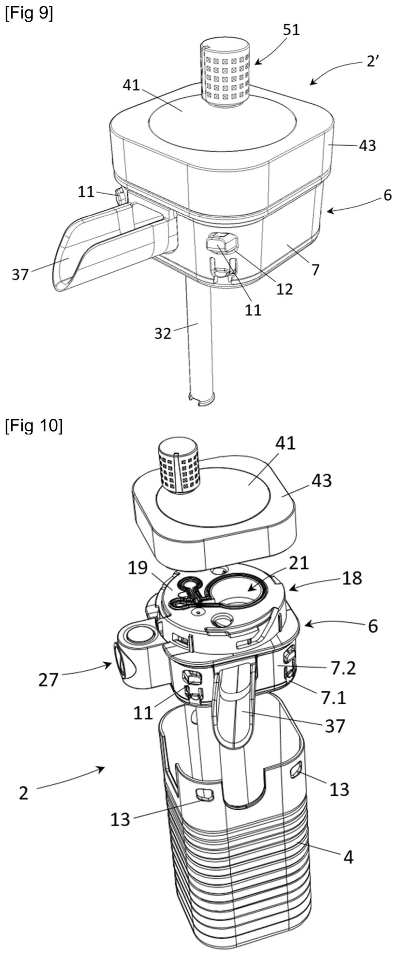

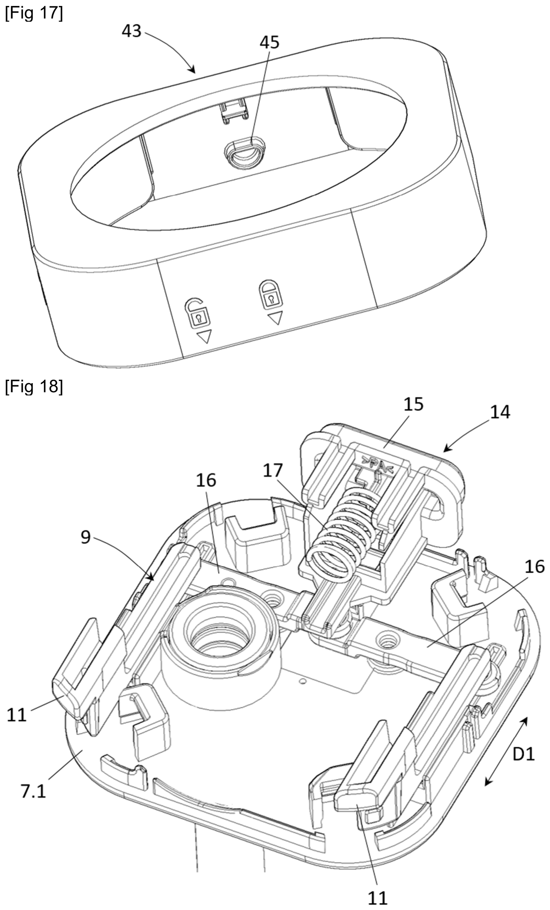

Selon le mode de réalisation représenté sur les figures, chaque corps de fermeture 7 comporte un corps inférieur 7.1 (voir la figure 18) et un corps supérieur 7.2 (voir la figure 10) qui sont fixés l'un à l'autre et qui délimitent un logement interne 8 dont la fonction sera décrite ci-après.

Comme montré sur la figure 18, chacun des dispositifs de moussage de lait chaud et froid 2, 2' comporte un dispositif de fixation 9 configuré pour fixer de manière amovible, c'est-à-dire de manière temporaire et réversible, la partie de mélange 6 respective, et plus particulièrement le corps de fermeture 7 respectif, au réservoir de lait 4 respectif.

Selon le mode de réalisation représenté sur les figures, chaque dispositif de fixation 9 comporte plusieurs organes de verrouillage 11, tel que des doigts de verrouillage, logés dans le logement interne 8 respectif. Chaque organe de verrouillage 11 est plus particulièrement configuré pour faire saillie hors du corps de fermeture 7 respectif à travers une ouverture traversante 12 respective qui débouche dans une surface périphérique externe du corps de fermeture 7 respectif.

Chaque dispositif de fixation 9 comporte en outre plusieurs éléments de verrouillage 13 prévus sur le réservoir de lait 4 respectif et situés à proximité de l'ouverture de remplissage supérieure 5 respective. Selon le mode de réalisation représenté sur les figures, chaque élément de verrouillage 13 est formé par un orifice de verrouillage configuré pour recevoir un organe de verrouillage 11 respectif lorsque le corps de fermeture 7 respectif est fixé au réservoir de lait 4 respectif. Cependant, selon une variante de réalisation de l'invention, les éléments de verrouillage 13 pourraient être par exemple des logements de verrouillage prévus sur une surface interne du réservoir de lait 4 respectif.

Les organes de verrouillage 11 sont plus particulièrement montés coulissants par rapport au corps de fermeture 7 respectif selon une direction de coulissement D1 et entre une position de verrouillage dans laquelle chaque organe de verrouillage 11 fait saillie hors du corps de fermeture 7 respectif, à travers l'ouverture traversante 12 respective, et est configuré pour coopérer avec l'élément de verrouillage 13 respectif de manière à fixer le corps de fermeture 7 respectif au réservoir de lait 4 respectif, et une position de libération dans laquelle chaque organe de verrouillage 11 est configuré pour libérer l'élément de verrouillage 13 respectif de telle sorte que le corps de fermeture 7 respectif peut être retiré du réservoir de lait 4 respectif. De façon avantageuse, la direction de coulissement D1 s'étend sensiblement orthogonalement par rapport à un axe central du corps de fermeture 7 respectif.

Chaque organe de verrouillage 11 peut par exemple être configuré pour être situé en retrait de la surface périphérique externe du corps de fermeture 7 respectif ou pour être affleurant avec ladite surface périphérique externe lorsque les organes de verrouillage 11 occupent la position de libération.

Comme montré plus particulièrement sur la figure 18, chacun des dispositifs de moussage de lait chaud et froid 2, 2' comporte un mécanisme d'actionnement 14 prévu sur le corps de fermeture 7 respectif et configuré pour déplacer les organes de verrouillage 11 respectifs dans la position de libération lorsque ledit mécanisme d'actionnement 14 est actionné par un utilisateur.

Chaque mécanisme d'actionnement 14 comporte plus particulièrement un organe d'actionnement 15, tel qu'un bouton d'actionnement, qui est actionnable manuellement par un utilisateur et qui est configuré pour déplacer les organes de verrouillage 11 respectifs de la position de verrouillage à la position de libération. De façon avantageuse, chaque organe d'actionnement 15 est monté coulissant par rapport au corps de fermeture 7 respectif selon la direction de coulissement D1 et entre une première position d'actionnement et une deuxième position d'actionnement. Chaque mécanisme d'actionnement 14 et les organes de verrouillage 11 respectifs sont plus particulièrement configurés de telle sorte qu'un déplacement de l'organe d'actionnement 15 respectif de la première position d'actionnement à la deuxième position d'actionnement entraîne un déplacement des organes de verrouillage 11 respectifs de la position de verrouillage à la position de libération.

Selon le mode de réalisation représenté sur les figures, chaque mécanisme d'actionnement 14 comporte deux organes de liaison 16 logés dans le logement interne 8 respectif et configurés chacun pour relier mécaniquement l'organe d'actionnement 15 respectif à un organe de verrouillage 11 respectif. Chaque organe de liaison 16 comporte une première portion d'extrémité sur laquelle est monté articulé, autour d'un premier axe d'articulation, l'organe d'actionnement 15 respectif, une deuxième portion d'extrémité sur laquelle est monté articulé, autour d'un deuxième axe d'articulation, l'organe de verrouillage 11 respectif, et une portion intermédiaire qui est montée mobile en rotation par rapport au corps de fermeture 7 respectif autour d'un axe de rotation qui est sensiblement parallèle aux premier et deuxième axes d'articulation respectifs.

Chaque mécanisme d'actionnement 14 est plus particulièrement configuré de telle sorte qu'un déplacement de l'organe d'actionnement 15 respectif de la première position d'actionnement à la deuxième position d'actionnement entraîne un pivotement des deux organes de liaison 16 respectifs dans un premier sens de pivotement et un déplacement des deux organes de verrouillage 11 respectifs de la position de verrouillage à la position de libération, et de telle sorte qu'un déplacement de l'organe d'actionnement 15 respectif de la deuxième position d'actionnement à la première position d'actionnement entraîne un pivotement des deux organes de liaison 16 respectifs dans un deuxième sens de pivotement et un déplacement des deux organes de verrouillage 11 respectifs de la position de libération à la position de verrouillage.

De façon avantageuse, chaque mécanisme d'actionnement 14 comporte un élément de rappel 17, tel qu'un ressort de rappel, configuré pour rappeler l'organe d'actionnement 15 respectif dans la première position d'actionnement, et donc pour rappeler les deux organes de verrouillage 11 respectifs dans la position de verrouillage.

Selon le mode de réalisation représenté sur les figures, chaque partie de mélange 6 comporte en outre un corps de mélange 18 qui est fixé, par exemple par encliquetage, au corps de fermeture 7 respectif. Chaque corps de mélange 18 est plus particulièrement pourvu d'une face supérieure 19 qui est globalement plane.

Chaque corps de mélange 18 comporte en outre une chambre de mélange 21, également appelée chambre d'homogénéisation, qui débouche dans la face supérieure 19 dudit corps de mélange 18 et qui est munie d'un orifice de sortie 22. Chaque corps de mélange 18 comporte également un conduit d'écoulement principal 23 ménagé dans la face supérieure 19 du corps de mélange 18 et débouchant dans la chambre de mélange 21 respective. Selon le mode de réalisation représenté sur les figures, chaque chambre de mélange 21 est du type cyclonique et est configurée pour s'étendre verticalement, et chaque conduit d'écoulement principal 23 débouche tangentiellement dans la chambre de mélange 21 respective. De façon avantageuse, chaque conduit d'écoulement principal 23 débouche dans une partie supérieure de la chambre de mélange 21 respective, et par exemple dans un point haut de ladite chambre de mélange 21, et chaque orifice de sortie 22 est situé dans une partie inférieure de la chambre de mélange 21 respective, et est par exemple situé en un point bas de ladite chambre de mélange 21.

Chaque conduit d'écoulement principal 23 est avantageusement formé dans le corps de mélangée 18 respectif qui est par exemple une pièce plastique. Chaque conduit d'écoulement principal 23 est donc avantageusement en plastique et dépourvu de matériau élastomère. Un tel agencement limite les risques d'encrassement de chaque conduit d'écoulement principal 23 qui nuiraient à la performance du dispositif de moussage de lait respectif.

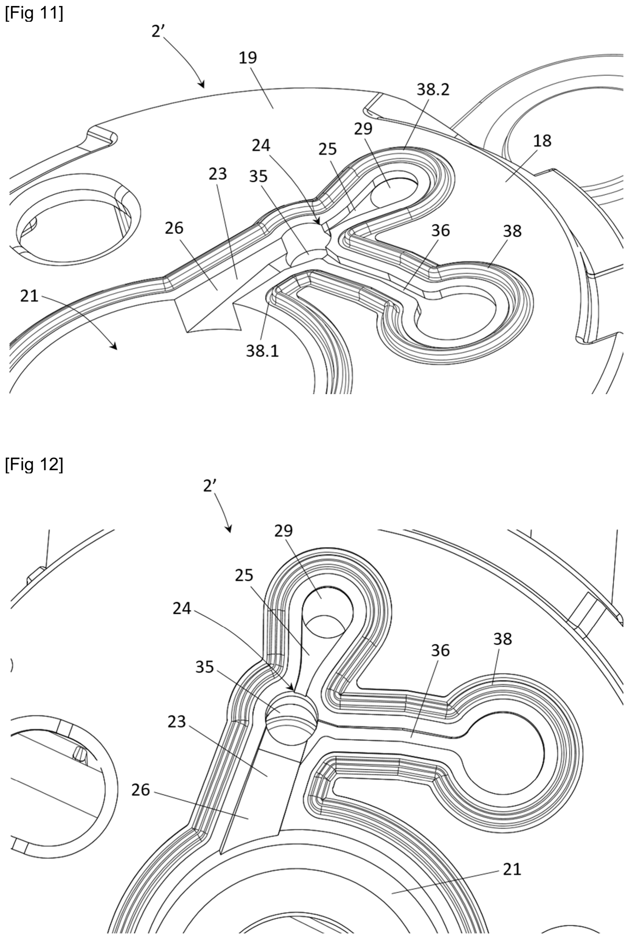

Comme montré plus particulièrement sur la figure 11, chaque conduit d'écoulement principal 23 comporte une restriction de section 24 située par exemple dans une portion centrale du conduit d'écoulement principal 23, une première portion de conduit 25 qui est située en amont de la restriction de section 24 respective et qui s'étend jusqu'à la restriction de section 24 respective, et une deuxième portion de conduit 26 qui est située en aval de la restriction de section 24 respective et qui s'étend depuis la restriction de section 24 respective et jusqu'à la chambre de mélange 21 respective. De façon avantageuse, chaque première portion de conduit 25 présente une section de passage qui diminue en direction de la restriction de section 24 respective. Chaque deuxième portion de conduit 26 présente une section de passage qui augmente en direction de la chambre de mélange 21 respective.

Selon le mode de réalisation représenté sur les figures, la deuxième portion de conduit de chacun des dispositifs de moussage de lait chaud et froid 2, 2' comporte deux parois latérales qui divergent en direction de la chambre de mélange 21 respective. De façon avantageuse, la deuxième portion de conduit 26 du dispositif de moussage de lait froid 2' présente une conicité inférieure à la conicité de la deuxième portion de conduit 26 du dispositif de moussage de lait chaud 2.

Les deux parois latérales de la deuxième portion de conduit 26 du dispositif de moussage de lait chaud 2 sont avantageusement inclinées l'une par rapport à l'autre d'un angle compris entre 10 et 25°, et par exemple égal à environ 15°, et les deux parois latérales de la deuxième portion de conduit 26 du dispositif de moussage de lait froid 2' sont avantageusement inclinées l'une par rapport à l'autre d'un angle compris entre 0 et 10°, et par exemple égal à environ 4°.

Comme montré sur la figure 11, la deuxième portion de conduit 26 du dispositif de moussage de lait froid 2' comporte une paroi de fond pourvue d'au moins une portion de surface qui est inclinée par rapport à l'horizontale de telle sorte que la hauteur de la deuxième portion de conduit 26 augmente en direction de la chambre de mélange 21. De façon avantageuse, la portion de surface est inclinée, par rapport à l'horizontale, d'un angle d'inclinaison compris entre 5 et 25°, et par exemple d'environ 15°

De façon avantageuse, l'extrémité aval de la première portion de conduit 25 du dispositif de moussage de lait froid 2' présente une section de passage qui est différente de, et par exemple qui est inférieure à, la section de passage de l'extrémité aval de la première portion de conduit 25 du dispositif de moussage de lait chaud 2.

Un rapport de la section de passage de l'extrémité aval de la première portion de conduit 25 du dispositif de moussage de lait chaud 2 sur la section de passage de l'extrémité aval de la première portion de conduit 25 du dispositif de moussage de lait froid 2' est avantageusement compris entre 1,1 et 2,5.

Selon un mode de réalisation de l'invention, l'extrémité aval de la première portion de conduit 25 du dispositif de moussage de lait froid 2' présente une section de passage comprise entre 0,5 et 3 mm², et par exemple entre 0,7 et 1,3 mm². Un tel dimensionnement de l'extrémité aval de la première portion de conduit 25 du dispositif de moussage de lait froid 2' permet d'augmenter les pertes de charge au sein de la première portion de conduit 25, et ainsi d'augmenter la dépression au niveau de la restriction de section 24 respective.

Selon un mode de réalisation de l'invention, l'extrémité amont de la deuxième portion de conduit 26 du dispositif de moussage de lait froid 2' peut par exemple présenter une section de passage comprise entre 4 et 18 mm², avantageusement entre 5 et 15 mm² et par exemple entre 5 et 12 mm², et l'extrémité amont de la deuxième portion de conduit 26 du dispositif de moussage de lait chaud 2 peut par exemple présenter une section de passage comprise entre 2,2 et 3,5 mm², et par exemple 2,4 et 2,8 mm².

Selon le mode de réalisation représenté sur les figures, chaque première portion de conduit 25 présente une section transversale de forme globalement rectangulaire, et chaque deuxième portion de conduit 26 présente également une section transversale de forme globalement rectangulaire.

L'extrémité aval de la première portion de conduit 25 du dispositif de moussage de lait froid 2' présente avantageusement une largeur inférieure à la largeur de l'extrémité aval de la première portion de conduit 25 du dispositif de moussage de lait chaud 2, et une hauteur inférieure à la hauteur de l'extrémité aval de la première portion de conduit 25 du dispositif de moussage de lait chaud 2.

L'extrémité aval de la première portion de conduit 25 du dispositif de moussage de lait froid 2' peut par exemple présenter une largeur comprise entre 0,7 et 1,1 mm (et par exemple égale à environ 1 mm) et une hauteur comprise entre 0,6 et 1,1 mm, par exemple égale à 0,9 mm et l'extrémité aval de la première portion de conduit 25 du dispositif de moussage de lait chaud 2 peut par exemple présenter une largeur comprise entre 1,1 et 1,5 mm (et par exemple égale à environ 1,25 mm) et une hauteur comprise entre 1,1 mm et 1,5 mm et par exemple égale à environ 1,25 mm.

L'extrémité amont de la deuxième portion de conduit 26 du dispositif de moussage de lait froid 2' présente avantageusement une largeur supérieure à la largeur de l'extrémité amont de la deuxième portion de conduit 26 du dispositif de moussage de lait chaud 2, et une hauteur supérieure à la hauteur de l'extrémité amont de la deuxième portion de conduit 26 du dispositif de moussage de lait chaud 2.

L'extrémité amont de la deuxième portion de conduit 26 du dispositif de moussage de lait froid 2' peut par exemple présenter une largeur supérieure ou égale à 2 mm, avantageusement comprise entre 2,5 et 5 mm et par exemple égale à 3,5 mm ou 4 mm, et une hauteur comprise entre 2 et 4 mm, et par exemple égale à environ 2,3 mm, et l'extrémité amont de la deuxième portion de conduit 26 du dispositif de moussage de lait chaud 2 peut par exemple présenter une largeur inférieure à 2 mm, et par exemple égale à environ 1,5 mm, et une hauteur comprise entre 1,5 et 2 mm, et par exemple égale à environ 1,7 mm.

En d'autres termes, l'extrémité amont de la deuxième portion de conduit de chacun des dispositifs de moussage de lait chaud 2 et froid 2' présente une hauteur comprise entre 1,5 et 4 mm

Chaque partie de mélange 6 comporte également un embout de raccordement 27 configuré pour être raccordé à l'embout de sortie d'eau 308 de l'appareil de distribution de boissons 3, et avantageusement pour être relié fluidiquement à la chaudière 306 qui équipe l'appareil de distribution de boissons 3 et qui est configurée pour produire de l'eau chaude et/ou de la vapeur. De façon avantageuse, chaque embout de raccordement 27 s'étend radialement par rapport à un axe central du corps de mélange 18 respectif, et est configuré pour s'étendre radialement par rapport à l'axe central du réservoir de lait 4 respectif.

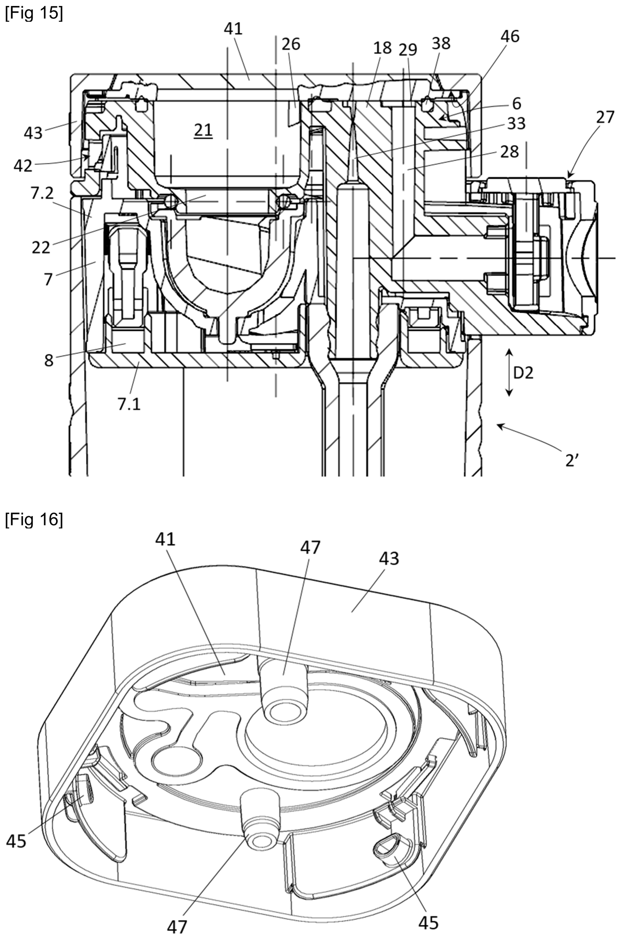

Chaque partie de mélange 6 comporte de plus un conduit d'amenée d'eau 28 (voir la figure 15) qui est relié fluidiquement à l'embout de raccordement 27 respectif et qui est pourvu d'un orifice de sortie d'eau 29 débouchant dans la première portion de conduit 25 respective et plus particulièrement à l'opposé de la chambre de mélange 21 respective. De façon avantageuse, chaque conduit d'amenée d'eau est un conduit d'amenée d'eau chaude/vapeur.

Chaque conduit d'écoulement principal 23 est ainsi configuré pour relier fluidiquement l'orifice de sortie d'eau 29 à la chambre de mélange 21 respective, et pour permettre un écoulement d'eau chaude, d'eau froide ou de vapeur dans le conduit d'écoulement principal 23 respectif et jusqu'à la chambre de mélange 21 respective.

Chacun des dispositifs de moussage de lait chaud et froid 2, 2' comporte également un conduit d'amenée de lait 31 relié fluidiquement au conduit d'écoulement principal 23 respectif, et donc configuré pour être relié fluidiquement à la chambre de mélange 21 respective via le conduit d'écoulement principal 23 respectif.

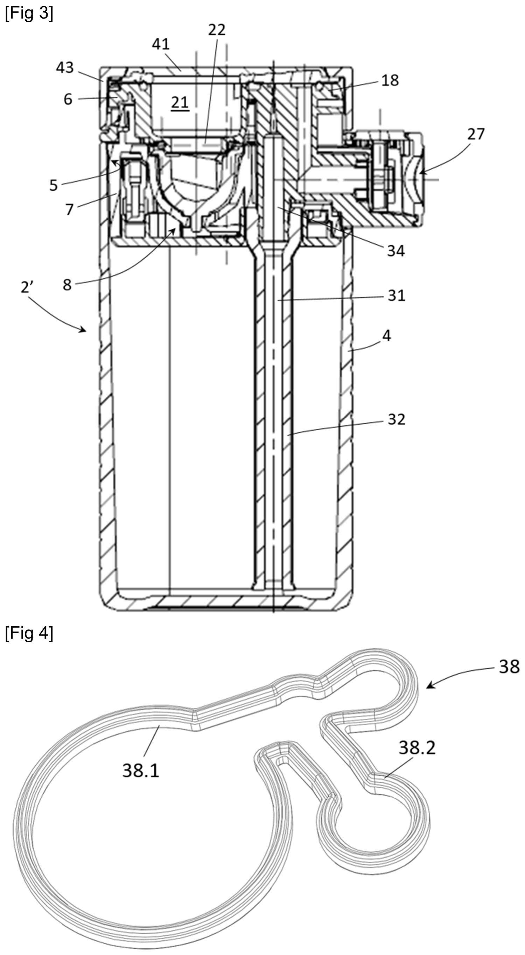

Comme montré plus particulièrement sur la figure 3, chaque conduit d'amenée de lait 31 comporte un tube d'aspiration de lait 32 fixé à la partie de mélange 6 respective (et plus particulièrement au corps de mélange 18), configuré pour s'étendre verticalement et débouchant dans une partie inférieure du réservoir de lait 4 respectif, et un passage d'écoulement calibré 33 délimité par le corps de mélange 18 respectif et relié fluidiquement au tube d'aspiration de lait 32 respectif par exemple via un conduit de liaison 34. Chaque passage d'écoulement calibré 33 est ainsi situé en aval du tube d'aspiration de lait 32 respectif, et est configuré pour définir un débit de lait prédéterminé dans le conduit d'amenée de lait 31 respectif.

Chaque passage d'écoulement calibré 33 comporte plus particulièrement un orifice de sortie de lait 35, par exemple de section circulaire, débouchant dans le conduit d'écoulement principal 23 respectif au niveau de la restriction de section 24 respective.

De façon avantageuse, l'orifice de sortie de lait 35 du dispositif de moussage de lait froid 2' présente une section de passage qui est différente de, et plus particulièrement qui est supérieure à, la section de passage de l'orifice de sortie de lait 35 du dispositif de moussage de lait chaud 2. Un rapport de la section de passage de l'orifice de sortie de lait 35 du dispositif de moussage de lait froid 2' sur la section de passage de l'orifice de sortie de lait 35 du dispositif de moussage de lait chaud 2 est avantageusement supérieur à 2, et est par exemple compris entre 2 et 15 et avantageusement entre 4 et 9. Un tel dimensionnement de l'orifice de sortie de lait 35 du dispositif de moussage de lait froid 2' permet d'augmenter le débit d'aspiration de lait dans le conduit d'écoulement principal 23 respectif, et donc de réduire l'échauffement du lait par la vapeur s'écoulant dans ledit conduit d'écoulement principal 23.

Selon un mode de réalisation de l'invention, l'orifice de sortie de lait 35 du dispositif de moussage de lait froid 2' présente un diamètre compris entre 3 et 6 mm, et par exemple égal à 4,3 mm, et l'orifice de sortie de lait 35 du dispositif de moussage de lait chaud 2 présente un diamètre compris entre 1 et 2 mm, et par exemple égal à environ 1,6 mm.

De façon avantageuse, le dispositif de moussage de lait froid 2' est configuré de telle sorte qu'un rapport de la section de passage de l'orifice de sortie de lait 35 sur la section de passage de l'extrémité aval de la première portion de conduit 25 est compris entre 3 et 40, et par exemple entre 3,5 et 31. Un tel rapport peut par exemple être égal à environ 10,5 ou 14,5.

Une telle configuration de l'extrémité aval de la première portion de conduit 25 et de l'orifice de sortie de lait 35 du dispositif de moussage de lait froid 2' assure un débit d'aspiration de lait sensiblement plus important dans le conduit d'écoulement principal 23 respectif (par rapport au débit d'aspiration de lait dans le conduit d'écoulement principal 23 du dispositif de moussage de lait chaud 2), ce qui permet de réduire de manière significative l'échauffement du lait par la vapeur s'écoulant dans ledit conduit d'écoulement principal 23 et donc de produire ainsi une mousse de lait froide, c'est-à-dire une mousse de lait sensiblement à température ambiante.

Selon le mode de réalisation représenté sur les figures, chaque corps de mélange 18 comporte en outre un canal d'admission d'air 36 qui est ménagé dans la face supérieure 19 du corps de mélange 18 et qui débouche dans le conduit d'écoulement principal 23 respectif au niveau de la restriction de section 24 respective. Chaque canal d'admission d'air 36 est ainsi configuré pour être relié fluidiquement à la chambre de mélange 21 respective via le conduit d'écoulement principal 23 respectif.

Chaque restriction de section 24 induit une augmentation de la vitesse de la vapeur s'écoulant dans le conduit d'écoulement principal 23 respectif, ce qui génère une dépression dans le conduit d'amenée de lait 31 respectif et dans le canal d'admission d'air 36 respectif. Chaque restriction de section 24 est donc plus particulièrement configurée pour former un système d'aspiration de lait et d'air basé sur l'effet venturi. Chaque conduit d'écoulement principal 23 est ainsi configuré de telle sorte qu'un écoulement d'eau chaude, d'eau froide ou de vapeur dans le conduit d'écoulement principal 23 depuis l'orifice de sortie d'eau 29 et jusqu'à la chambre de mélange 21 respective génère une dépression dans le conduit d'amenée de lait 31 respectif et une dépression dans le canal d'admission d'air 36 respectif et entraîne par conséquent une aspiration de lait et d'air dans le conduit d'écoulement principal 23 respectif et écoulement du lait et de l'air aspirés jusqu'à la chambre de mélange 21 respective. De plus, chaque deuxième portion de conduit 26, qui présente une section de passage qui augmente en direction de la chambre de mélange 21, favorise un premier mélange de la vapeur, du lait et de l'air provenant respectivement de l'orifice de sortie d'eau 29, du conduit d'amenée de lait 31 respectif et du canal d'admission d'air 36 respectif, avant leur arrivée dans la chambre de mélange 21 respective où l'on obtient une homogénéisation du mélange notamment via le mouvement cyclonique. Ainsi, chaque deuxième portion de conduit 26 forme une première zone de mélange dans laquelle un premier mélange est effectué, et chaque chambre de mélange 21 forme une deuxième zone de mélange dans laquelle le mélange commencé dans la première zone de mélange respective se poursuit.

Chaque partie de mélange 6 comporte en outre un conduit de déversement de lait 37 relié fluidiquement à l'orifice de sortie 22 de la chambre de mélange 21 respective, et configuré pour permettre un déversement de lait et de mousse de lait dans un récipient, tel qu'une tasse, disposé verticalement en dessous du conduit de déversement de lait 37. De façon avantageuse, chaque conduit de déversement de lait 37 est configuré pour s'étendre radialement par rapport à l'axe central du réservoir de lait 4 respectif.

Comme montré plus particulièrement sur la figure 4 et 11, chacun des dispositifs de moussage de lait chaud et froid 2, 2' comporte un joint d'étanchéité 38 s'étendant autour de la chambre de mélange 21 respective, du conduit d'écoulement principal 23 respectif et du canal d'admission d'air 36 respectif. A cet effet, chaque corps de mélange 18 comporte une rainure de réception 39 ménagée dans la face supérieure 19 du corps de mélange 18 et dans laquelle est logé le joint d'étanchéité 38 respectif.

Selon le mode de réalisation représenté sur les figures, chaque joint d'étanchéité 38 comporte un corps de joint 38.1 logé intégralement dans la rainure de réception 39 respective, et une lèvre d'étanchéité 38.2 s'étendant le long du corps de joint 38.1 respectif et faisant saillie hors de la rainure de réception 39 respective. De façon avantageuse, chaque joint d'étanchéité 38 est continu.

Chacun des dispositifs de moussage de lait chaud et froid 2, 2' comporte de plus une partie de fermeture 41 configurée pour recouvrir le corps de mélange 18 respectif et pour prendre appui contre ledit corps de mélange 18.

Comme montré sur la figure 3, chaque partie de fermeture 41 est globalement plane, et chaque joint d'étanchéité 38 est ainsi agencé à une zone de jonction, entre la partie de mélange 6 respective et la partie de fermeture 41 respective, qui est globalement plane.

Chaque partie de fermeture 41 est plus particulièrement montée mobile par rapport à la partie de mélange 6 respective entre une position de fermeture dans laquelle ladite partie de fermeture 41 ferme la chambre de mélange 21 respective, le conduit d'écoulement principal 23 respectif et le canal d'admission d'air 36 respectif, et une position d'ouverture dans laquelle ladite chambre de mélange 21, le conduit d'écoulement principal 23 respectif et le canal d'admission d'air 36 respectif sont ouverts et accessibles pour être nettoyés.

De façon avantageuse, chacun des dispositifs de moussage de lait chaud et froid 2, 2' comporte un système de maintien 42 configuré pour maintenir la partie de fermeture 41 respective en position de fermeture et pour assurer une compression du joint d'étanchéité 38 respectif lorsque la partie de fermeture 41 respectif est en position de fermeture. Chaque système de maintien 42 est plus particulièrement configuré pour plaquer la partie de fermeture 41 respective contre la face supérieure 19 du corps de mélange 18 respectif lorsque la partie de fermeture 41 respective est en position de fermeture, de manière à comprimer le joint d'étanchéité 38 respectif, et plus particulièrement la lèvre d'étanchéité 38.2 du joint d'étanchéité 38 respectif. Selon le mode de réalisation représenté sur les figures, chaque système de maintien 42 est également configuré pour fixer de manière amovible, c'est-à-dire de manière temporaire et réversible, la partie de fermeture 41 respective à la partie de mélange 6 respective.

Comme montré sur la figure 3, chaque système de maintien 42 comporte une partie de verrouillage 43, tel qu'une bague de verrouillage, montée mobile en rotation par rapport à la partie de fermeture 41 respective autour d'un axe de rotation A et entre une position de libération dans laquelle la partie de verrouillage 43 autorise un déplacement de la partie de fermeture 41 respective vers la position d'ouverture et une position de verrouillage dans laquelle la partie de verrouillage 43 empêche un déplacement de la partie de fermeture 41 respective vers la position d'ouverture. L'axe de rotation A est avantageusement sensiblement parallèle à, et par exemple colinéaire avec, l'axe central du réservoir de lait 4 respectif lorsque la partie de mélange 6 est reçue dans le réservoir de lait 4 respectif et que la partie de fermeture 41 occupe la position de fermeture.

Selon le mode de réalisation représenté sur les figures, chaque partie de fermeture 41 est configurée pour occuper une position intermédiaire située entre la position de fermeture et la position d'ouverture et dans laquelle la partie de fermeture 41 repose sur la lèvre d'étanchéité 38.2 du joint d'étanchéité 38 respectif et est donc située en regard de la chambre de mélange 21 respective et du conduit d'écoulement principal 23 respectif et est espacée de la partie de mélange 6 respective, et chaque système de maintien 42 est configuré pour déplacer la partie de fermeture 41 respective de la position intermédiaire à la position de fermeture et en direction de la partie de mélange 6 respective, et donc pour rapprocher la partie de fermeture 41 respective de la partie de mélange 6 respective, lorsque la partie de verrouillage 43 est déplacée de la position de libération vers la position de verrouillage.

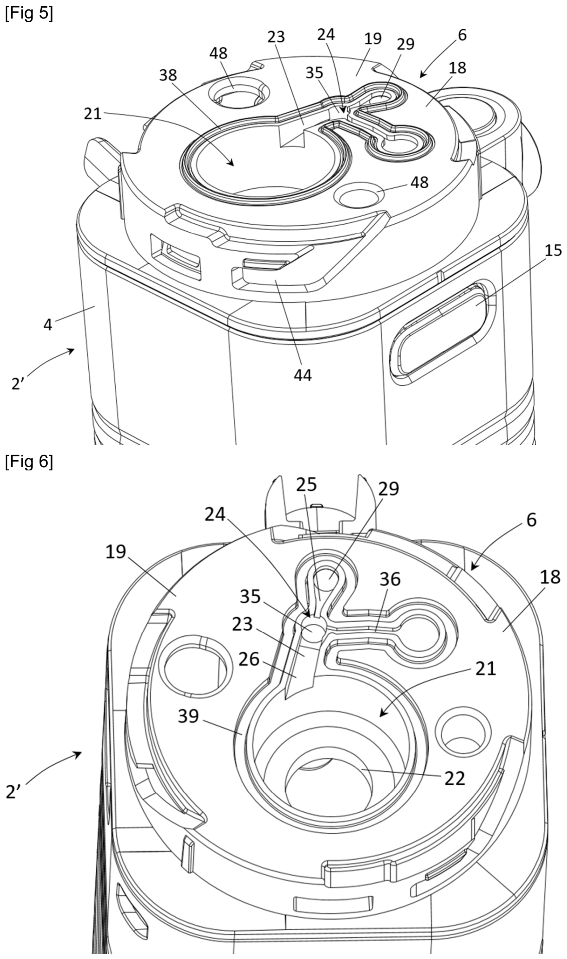

Comme montré sur les figures 5 et 17, chaque système de maintien 42 comporte en outre une pluralité d'organes de fixation 44, tels que des rampes de fixation ou rainures de fixation, prévus sur le corps de mélange 18 respectif et répartis autour d'un axe central du corps de mélange 18, et une pluralité d'éléments de fixation 45, tels que des ergots de fixation, prévus sur la partie de verrouillage 43 respective et répartis autour de l'axe de rotation A. Les éléments de fixation 45 sont configurés pour coopérer respectivement avec les organes de fixation 44 prévus sur le corps de mélange 18 respectif lors d'une rotation de la partie de verrouillage 43 respective de la position de libération vers la position de verrouillage, de manière à déplacer ladite partie de verrouillage 43 en direction de la partie de mélange 6 respective. Les organes de fixation 44 et les éléments de fixation 45 appartenant à un même système de maintien 42 peuvent par exemple former un système de fixation par baïonnettes ou du type vis-écrou. Selon le mode de réalisation représenté sur les figures, les organes de fixation 44 sont prévus sur une surface externe du corps de mélange 18 respectif, et les éléments de fixation 45 sont prévus sur une surface interne de la partie de verrouillage 43 respective.

De façon avantageuse, chaque partie de verrouillage 43 comporte une face d'appui 46 (voir notamment la figure 15) qui s'étend transversalement à l'axe de rotation A et qui est configurée pour déplacer la partie de fermeture 41 respective vers la partie de mélange 6 respective et parallèlement à l'axe de rotation A lors d'une rotation de ladite partie de verrouillage 43 de la position de libération vers la position de verrouillage. Chaque face d'appui 46 est plus particulièrement configurée pour glisser sur la partie de fermeture 41 respective lors d'une rotation de la partie de verrouillage 43 respective entre la position de libération et la position de verrouillage. De façon avantageuse, chaque face d'appui 46 est annulaire et est configurée pour prend appui contre un bord périphérique de la partie de fermeture 41 respective.

Selon un mode de réalisation de l'invention, chaque partie de verrouillage 43 peut être montée de manière imperdable sur la partie de fermeture 41 respective, de telle sorte que ladite partie de verrouillage 43 et la partie de fermeture 41 respective forment un sous ensemble indémontable.

Comme montré sur les figures 5 et 16, chacun des dispositifs de moussage de lait chaud et froid 2, 2' comporte un dispositif de guidage en translation configuré pour guider en translation la partie de fermeture 41 respective par rapport à la partie de mélange 6 respective selon une direction de translation D2, qui est par exemple perpendiculaire à la zone de jonction et donc parallèle à l'axe de rotation A, lorsque la partie de fermeture 41 respective est déplacée entre la position intermédiaire et la position de fermeture. Chaque dispositif de guidage en translation peut par exemple comporter deux organes de guidage 47, tel que des plots de guidage, prévus sur la partie de fermeture 41 respective, et deux éléments de guidage 48, tel que des orifices de guidage, prévus sur le corps de mélange 18 respectif et aptes à recevoir respectivement les deux organes de guidage 47 respectifs.

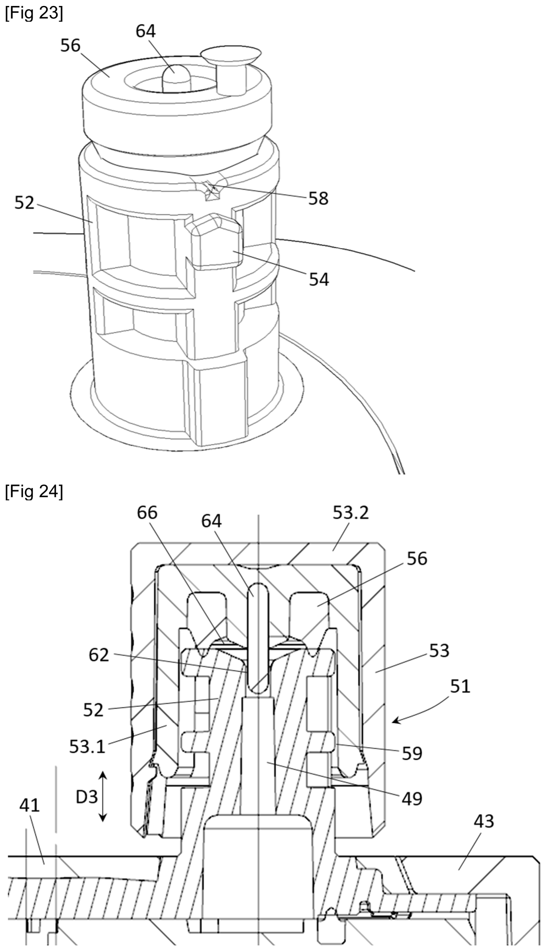

Comme montré plus particulièrement sur la figure 24, chaque partie de fermeture 41 comporte en outre un conduit d'amenée d'air 49 relié au conduit d'écoulement principal 23 respectif via le canal d'admission d'air 36 respectif, et un dispositif de réglage de débit d'air 51 configuré pour régler un débit d'air s'écoulant dans le conduit d'amenée d'air 49 respectif. Cependant, selon une variante de réalisation de l'invention, chaque partie de mélange 6 pourrait être dépourvue du canal d'admission d'air 36, et le conduit d'amenée d'air 49 pourrait être relié directement au conduit d'écoulement principal 23 respectif.

Selon le mode de réalisation représenté sur les figures, chaque dispositif de réglage de débit d'air 51 comporte une partie de support 52 fixée à la partie de fermeture 41 respective et faisant saillie d'une face supérieure de la partie de fermeture 41 respective, et un organe de réglage de débit 53, tel qu'un bouton de réglage de débit, supporté par la partie de support 52 respective et monté mobile, et par exemple monté mobile selon un mouvement hélicoïdal, par rapport à la partie de support 52 respective selon une direction de déplacement D3 qui peut par exemple être sensiblement verticale lorsque le dispositif de moussage de lait respectif repose sur une surface horizontale.

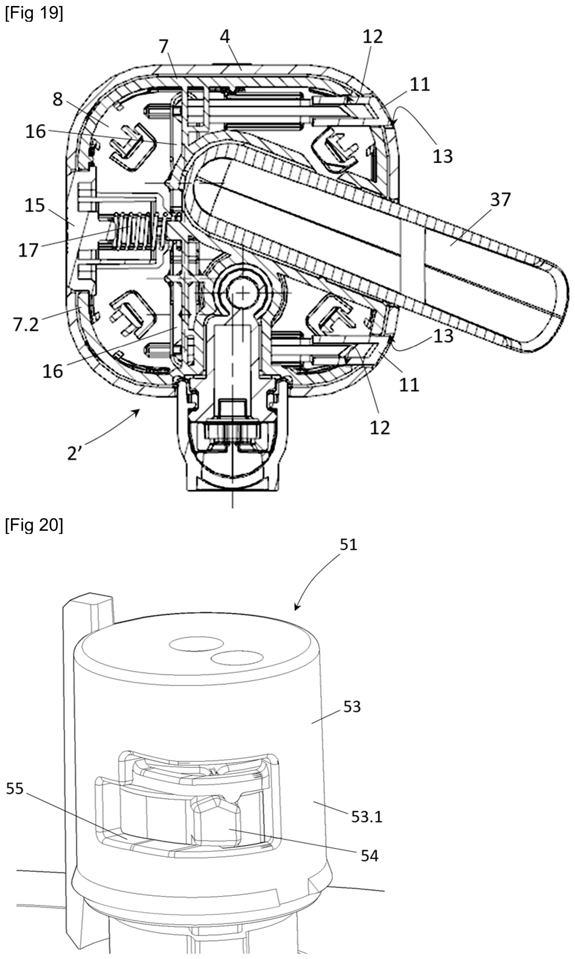

Chaque organe de réglage de débit 53 et la partie de support 52 respective peuvent par exemple s'étendre coaxialement l'un par rapport à l'autre, et chaque partie de support 52 peut par exemple comporter deux doigts de guidage 54 (voir la notamment figure 20) diamétralement opposés et montés coulissants respectivement dans deux rainures de guidage hélicoïdales 55 prévues sur l'organe de réglage de débit 53 respectif.

Selon le mode de réalisation représenté sur les figures, chaque organe de réglage de débit 53 comporte une partie de réglage 53.1 qui est configurée pour coiffer la partie de support 52 respective et qui comporte une paroi supérieure recouvrant la partie de support 52 respective et une paroi périphérique ayant une forme globalement tubulaire et s'étendant autour de la partie de support 52 respective. Comme montré plus particulièrement sur les figures 1 et 24, chaque organe de réglage de débit 53 comporte en outre une partie de manipulation 53.2 solidaire de la partie de réglage 53.1 respective et configurée pour être manipulée par un utilisateur de manière à déplacer ledit organe de réglage de débit 53 selon la direction de déplacement D3.

Chaque organe de réglage de débit 53 est configuré pour occuper une pluralité de positions de réglage décalées les unes des autres selon la direction de déplacement D3. De façon avantageuse, la direction de déplacement D3 est sensiblement parallèle à l'axe central du réservoir de lait 4 respectif lorsque la partie de mélange 6 respective est reçue dans ledit réservoir de lait 4 et que la partie de fermeture 41 respective est en position de fermeture.

Chaque dispositif de réglage de débit d'air 51 comporte en outre un élément d'étanchéité 56 qui est annulaire et qui est fixé à l'organe de réglage de débit 53 respectif. Selon le mode de réalisation représenté sur les figures, chaque partie de support 52 comporte une surface d'appui 57, prévue sur une face d'extrémité supérieure de la partie de support 52, qui est annulaire et contre laquelle est apte à être comprimé l'élément d'étanchéité 56 respectif en fonction de la position occupée par l'organe de réglage de débit 53 respectif.

L'élément d'étanchéité 56 et la partie de support 52 appartenant à un même dispositif de réglage de débit d'air 51 sont configurés pour délimiter un passage d'écoulement d'air 58 (voir la figure 23) ayant une section de passage qui varie en fonction de la position occupée par l'organe de réglage de débit 53 respectif. Chaque passage d'écoulement d'air 58 est plus particulièrement configuré pour relier fluidiquement une ouverture d'admission d'air 59, définie par le dispositif de réglage de débit d'air 51 respectif, au conduit d'amenée d'air 49 respectif. Selon le mode de réalisation représenté sur les figures, chaque ouverture d'admission d'air 59 est définie par un jeu fonctionnel entre l'organe de réglage de débit 53 respectif et la partie de support 52 respective.

Chaque organe de réglage de débit 53 est plus particulièrement déplaçable entre une position de réglage maximale dans laquelle la section de passage du passage d'écoulement d'air 58 respectif est maximale, et une position de réglage minimale dans laquelle la section de passage du passage d'écoulement d'air 58 respectif est minimale.

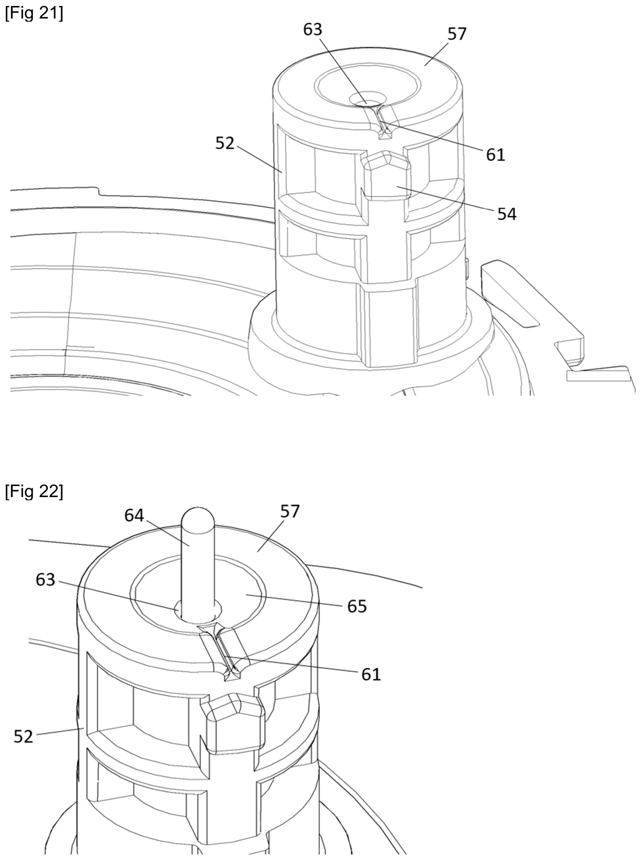

Comme montré sur la figure 22, chaque partie de support 52 comporte une rainure de passage 61 qui est ménagée dans la surface d'appui 57 respective et qui délimite en partie le passage d'écoulement d'air 58 respectif. Chaque rainure de passage 61 peut par exemple s'étendre radialement par rapport à la direction de déplacement D3, et présenter une section transversale globalement en forme de V. Chaque dispositif de réglage de débit peut par exemple être configuré de telle sorte que, lorsque l'organe de réglage de débit 53 respectif occupe la position de réglage minimale, l'élément d'étanchéité 56 respectif est inapte à obturer entièrement la rainure de passage 61 respective et autorise un écoulement d'air minimal à travers le passage d'écoulement d'air 58 respectif.

Comme montré plus particulièrement sur la figure 24, chaque conduit d'amenée d'air 49 comprend un passage d'air calibré 62 qui est situé en aval de l'organe de réglage de débit 53 respectif et qui est configuré pour définir un débit d'air maximal dans le conduit d'amenée d'air 49 respectif. Selon un mode de réalisation de l'invention, le passage d'air calibré 62 du dispositif de moussage de lait froid 2' présente une section de passage supérieure à la section de passage du passage d'air calibré 62 du dispositif de moussage de lait chaud 2.

Selon le mode de réalisation représenté sur les figures, chaque partie de support 52 comporte un trou d'insertion 63 (qui peut présenter un diamètre compris entre 1,5 et 2 mm et par exemple égal à environ 1,8 mm) orienté sensiblement parallèlement à la direction de déplacement D3, et chaque dispositif de réglage de débit d'air 51 comporte un organe de restriction de passage 64, tel qu'une goupille ou un pointeau de forme globalement cylindrique, ayant une portion d'extrémité inférieure qui logée dans le trou d'insertion 63 respectif. Chaque organe de restriction de passage 64 est solidaire en mouvement de l'organe de réglage de débit 53 respectif, et est donc monté mobile dans le trou d'insertion 63 respectif selon la direction de déplacement D3. De façon avantageuse, chaque organe de restriction de passage 64 est allongé et s'étend selon une direction d'extension qui est parallèle à la direction de déplacement D3. Le trou d'insertion 63 et l'organe de restriction de passage 64 appartenant à un même dispositif de moussage de lait délimitent plus particulièrement le passage d'air calibré 62 respectif, de telle sorte que chaque passage d'air calibré 62 est annulaire.

Selon le mode de réalisation représenté sur les figures, chaque partie de support 52 comporte une cavité 65 qui débouche dans la face d'extrémité supérieure de ladite partie de support 52 et dans laquelle débouche le trou d'insertion 63 respectif. La cavité 65 et l'organe de réglage de débit 53 appartenant à un même dispositif de moussage de lait délimitent une chambre interne 66 configurée pour relier fluidiquement le passage d'écoulement d'air 58 respectif au trou d'insertion 63 respectif.

Selon un autre mode de réalisation de l'invention non représenté sur les figures, chacune des dispositifs de moussage de lait chaud et froid 2, 2' pourrait être dépourvu d'un réservoir de lait. Selon un tel mode de réalisation, chaque conduit d'amenée de lait 31 pourrait être relié fluidiquement à un réservoir de lait directement intégré dans l'appareil de distribution de boissons 3 (ou positionné sur ou à proximité du support de récipient 302 appartenant à l'appareil de distribution de boissons 3), et la tête de distribution de boisson 303 appartenant à l'appareil de distribution de boissons 3 pourrait comporter une sortie d'eau propre à être reliée à chaque embout de raccordement 27 et distincte de la ou des buse(s) de sortie de café 304A, 304B.

Les dispositifs de moussage de lait chaud et froid 2, 2' permettent, par le design et la géométrie respective de leur corps de mélange 18, lorsqu'ils sont associés à l'appareil de distribution de boissons 3 de produire respectivement une mousse de lait chaude et une mousse de lait froide sans avoir à adapter la commande de la chaudière 306 et d'une pompe de circulation d'eau dans l'appareil de distribution de boissons 3 au dispositif de moussage de lait connecté à celui-ci. Ainsi, il n'est notamment pas nécessaire d'équiper l'appareil de distribution de boissons 3 avec un dispositif de détection apte à détecter automatiquement le dispositif de moussage de lait (parmi les dispositifs de moussage de lait et froid) qui est connecté à l'appareil de distribution de boissons 3.

L'appareil de distribution de boissons 3 est propre à délivrer des boissons froide ou chaude tels que des cafés froids également appelé « cold brew » ou des cafés chauds comprenant :
- de la mousse de lait froide à une température inférieure à 35°C, de préférence inférieure à 30°C, de préférence encore inférieure à 20°C si le dispositif de moussage de lait froid 2' est associé à l'appareil de distribution de boissons 3,
- de la mousse de lait chaude à une température supérieure à 40°C, de préférence supérieure à 50°C si le dispositif de moussage de lait chaud 2 est associé à l'appareil de distribution de boissons 3.

Bien entendu, la présente invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

## Revendications

1. Système de moussage de lait comprenant un dispositif de moussage de lait chaud (2) et un dispositif de moussage de lait froid (2') destinés chacun à coopérer avec un appareil de distribution de boissons (3), chacun des dispositifs de moussage de lait chaud et froid (2, 2') comportant :
- une partie de mélange (6) comprenant :
o un conduit d'écoulement principal (23) comportant une restriction de section (24), une première portion de conduit (25) qui est située en amont de la restriction de section (24) et qui s'étend jusqu'à la restriction de section (24), et une deuxième portion de conduit (26) qui est située en aval de la restriction de section (24) et qui s'étend depuis la restriction de section (24),
o une chambre de mélange (21) reliée fluidiquement au conduit d'écoulement principal (23) et munie d'un orifice de sortie (22),
- une partie de fermeture (41) configurée pour occuper une position de fermeture dans laquelle ladite partie de fermeture (41) ferme la chambre de mélange (21) respective et le conduit d'écoulement principal (23) respectif et une position d'ouverture dans laquelle la chambre de mélange (21) respective et le conduit d'écoulement principal (23) respectif sont ouverts et accessibles pour être nettoyés,
- un conduit d'amenée d'eau (28) comprenant un orifice de sortie d'eau (29) débouchant dans la première portion de conduit (25) respective,
- un conduit d'amenée de lait (31) comprenant un orifice de sortie de lait (35) débouchant dans le conduit d'écoulement principal (23) respectif, et
- un conduit d'amenée d'air (49) relié fluidiquement au conduit d'écoulement principal (23) respectif,
**caractérisé en ce que** l'orifice de sortie de lait (35) du dispositif de moussage de lait froid (2') présente une section de passage qui est différente de la section de passage de l'orifice de sortie de lait (35) du dispositif de moussage de lait chaud (2), et **en ce qu'**une extrémité aval de la première portion de conduit (25) du dispositif de moussage de lait froid (2') présente une section de passage qui est différente de la section de passage d'une extrémité aval de la première portion de conduit (25) du dispositif de moussage de lait chaud (2).

2. Système de moussage de lait (2) selon la revendication 1, dans lequel l'orifice de sortie de lait (35) du dispositif de moussage de lait froid (2') présente une section de passage qui est supérieure à la section de passage de l'orifice de sortie de lait (35) du dispositif de moussage de lait chaud (2).

3. Système de moussage de lait (2) selon la revendication 2, dans lequel un rapport de la section de passage de l'orifice de sortie de lait (35) du dispositif de moussage de lait froid (2') sur la section de passage de l'orifice de sortie de lait (35) du dispositif de moussage de lait chaud (2) est supérieur à 2.

4. Système de moussage de lait (2) selon l'une quelconque des revendications 1 à 3, dans lequel l'extrémité aval de la première portion de conduit (25) du dispositif de moussage de lait froid (2') présente une section de passage qui est inférieure à la section de passage de l'extrémité aval de la première portion de conduit (25) du dispositif de moussage de lait chaud (2).

5. Système de moussage de lait (2) selon la revendication 4, dans lequel un rapport de la section de passage de l'extrémité aval de la première portion de conduit (25) du dispositif de moussage de lait chaud (2) sur la section de passage de l'extrémité aval de la première portion de conduit (25) du dispositif de moussage de lait froid (2') est supérieur à 1,1.

6. Système de moussage de lait (2) selon l'une quelconque des revendications 1 à 5, dans lequel chaque première portion de conduit (25) présente une section de passage qui diminue en direction de la restriction de section (24) respective, et chaque deuxième portion de conduit (26) présente une section de passage qui augmente en direction de la chambre de mélange (21) respective.

7. Système de moussage de lait (2) selon la revendication 6, dans lequel la deuxième portion de conduit (26) du dispositif de moussage de lait froid (2') présente une conicité inférieure à la conicité de la deuxième portion de conduit (26) du dispositif de moussage de lait chaud (2).

8. Système de moussage de lait (2) selon l'une quelconque des revendications 1 à 7, dans lequel l'extrémité amont de la deuxième portion de conduit (26) du dispositif de moussage de lait froid (2') présente une largeur supérieure à la largeur de l'extrémité amont de la deuxième portion de conduit (26) du dispositif de moussage de lait chaud (2).

9. Système de moussage de lait (2) selon l'une quelconque des revendications 1 à 8, dans lequel la deuxième portion de conduit (26) du dispositif de moussage de lait froid (2') présente une hauteur minimale supérieure à la hauteur minimale de la deuxième portion de conduit (26) du dispositif de moussage de lait chaud (2).

10. Système de moussage de lait (2) selon l'une quelconque des revendications 1 à 9, dans lequel l'extrémité aval de la première portion de conduit (25) du dispositif de moussage de lait froid (2') présente une largeur inférieure à la largeur de l'extrémité aval de la première portion de conduit (25) du dispositif de moussage de lait chaud (2).

11. Système de moussage de lait (2) selon l'une quelconque des revendications 1 à 10, dans lequel le conduit d'amenée d'air (49) du dispositif de moussage de lait froid (2') présente une section de passage supérieure à la section de passage du conduit d'amenée d'air (49) du dispositif de moussage de lait chaud (2).

12. Système de moussage de lait (2) selon l'une quelconque des revendications 1 à 11, dans lequel, pour le dispositif de moussage de lait froid (2'), un rapport de la section de passage de l'orifice de sortie de lait (35) sur la section de passage de l'extrémité aval de la première portion de conduit (25) est supérieur à 3.

13. Système de moussage de lait (2) selon l'une quelconque des revendications 1 à 12, dans lequel chaque chambre de mélange (21) est du type cyclonique et est configurée pour s'étendre sensiblement verticalement, chaque conduit d'écoulement principal (23) débouchant dans une partie supérieure de la chambre de mélange (21) respective et l'orifice de sortie (22) de chaque chambre de mélange (21) étant situé dans une partie inférieure de ladite chambre de mélange (21).

14. Système de moussage de lait (2) selon l'une quelconque des revendications 1 à 13, dans lequel chacun des dispositifs de moussage de lait chaud et froid (2, 2') comporte un réservoir de lait (4) comprenant une ouverture de remplissage supérieure (5), chaque partie de mélange (6) étant agencée au niveau de l'ouverture de remplissage supérieure (5) respective.

15. Appareil de distribution de boissons (3) comportant un embout de sortie d'eau (308) et un système de moussage de lait (2) selon l'une quelconque des revendications 1 à 14, le conduit d'amenée d'eau (28) de chacun des dispositifs de moussage de lait chaud et froid (2, 2') étant configuré pour être relié fluidiquement à l'embout de sortie d'eau (308).
